# EUROPEAN PATENT APPLICATION

(11) **EP 2 781 560 A1**
(43) Date of publication of application: **24.09.2014**
(21) Application number: 14159098.4
(22) Date of filing: 12.03.2014
(51) Int. Cl.: C09D 5/00

(54) **A bond coat system and a coated component**

(30) Priority: 18.03.2013 US 201313846102
(71) Applicant: General Electric Company, Schenectady, New York 12345 (US)
(72) Inventor: Pabla, Surinder Singh, Greenville, South Carolina 29615 (US); Onal, Kivilcim, Greenville, South Carolina 29615 (US)
(74) Representative: Szary, Anne Catherine

(57) **Abstract**

A bond coat system (210) and coated component are disclosed. The bond coat system (210) includes a first coating layer (212) adjacent a substrate (200) and a second coating layer (214) adjacent the first coating layer (212). The first coating layer (212) includes a γ/β microstructure. The second coating layer (214) includes a γ/γ'+β microstructure. The coated component includes a substrate (200) having a surface (30), a first coating layer (212) disposed on the surface (30), and a second coating layer (214) disposed on the first coating layer (212).

## Description

### FIELD OF THE INVENTION

The subject matter disclosed herein relates to metallic alloy compositions suitable for use in high temperature environments, and more particularly to metallic alloy compositions suitable for use as bond coat materials in high temperature environments to provide protection from oxidation.

### BACKGROUND OF THE INVENTION

In harsh environments such as a turbine engine, metallic overlay or bond coatings (i.e. MCrAlY and/or aluminides) and thermal barrier coatings (TBCs) protect the underlying metal alloy substrate against heat and the corrosive and oxidizing environment of the hot gases. The TBC provides a heat-reducing barrier between the hot combustion gases and the metal alloy substrate, and can prevent, mitigate, or reduce potential heat and corrosion induced damage to the substrate.

MCrAlY alloys are a family of high temperature coatings, wherein M is selected from one or a combination of iron, nickel and cobalt; and Cr is chromium, Al is aluminum, and Y is yttrium. These include MCrAlY coatings with gamma and beta phases in the alloy microstructures. Various alloying elements, such as Si, Hf, Pd and Pt, have been added to gamma/beta MCrAlY alloys to improve oxidation resistance, but this may lead to reduction in strain tolerance of the bond coat materials and may also result in reduction of spallation life of the coating systems in which they have been employed, particularly those which include TBCs.

Therefore, a need exists to provide bond coat materials that improve the spallation resistance of protective coating systems in which they are employed, particularly those which employ TBCs.

### BRIEF DESCRIPTION OF THE INVENTION

In an exemplary embodiment, a bond coating system is provided. The bond coating system includes a bond coat including a first coating layer adjacent a substrate and a second coating layer adjacent the first coating layer and a top coat. The first coating layer includes a γ/β microstructure. The second coating layer includes a γ/γ'+β microstructure.

In another exemplary embodiment, a coated component is provided. The coated component includes a substrate having a surface, a first coating layer disposed on the surface, the first coating including a γ/β microstructure, and a second coating layer disposed on the first coating layer, the second coating layer including a γ/γ'+β microstructure.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 is a schematic sectional view of exemplary embodiments of components as disclosed herein.
FIG. 2 is a sectional view of a surface region of an exemplary embodiment of a substrate in the form of a turbine blade and bond coating as disclosed herein.
FIG. 3 is a second exemplary embodiment of a substrate in the form of a turbine blade and bond coating as disclosed herein.
FIG. 4 is a third exemplary embodiment of a substrate in the form of a turbine blade and bond coating as disclosed herein.
FIG. 5 is a fourth exemplary embodiment of a substrate in the form of a turbine blade and bond coating as disclosed herein.
FIG. 6 is a fifth exemplary embodiment of a substrate in the form of a turbine blade and bond coating as disclosed herein.
FIG. 7 is a plot of furnace cyclic testing (FCT) life measured in cyclic hours to spallation at 1900°F/ 45-minute dwell time for an exemplary embodiment of first and second coating layers of bond coating system applied to a substrate GTD-111 as well as a comparative bond coat alloy.
FIG. 8 is a plot of furnace cyclic testing (FCT) life measured in cyclic hours to spallation at 1900°F/ 45-minute dwell time for an exemplary embodiment of first and second coating layers of bond coating system applied to a substrate RN4 as well as a comparative bond coat alloy.
FIG. 9 is a plot of furnace cyclic testing (FCT) life measured in cyclic hours to spallation at 1900°F/ 45-minute dwell time for an exemplary embodiment of first and second coating layers of bond coat system applied to a substrate R108 as well as a comparative bond coat alloy.

Wherever possible, the same reference numbers will be used throughout the drawings to represent the same parts.

### DETAILED DESCRIPTION OF THE INVENTION

Provided is an exemplary bond coat system and coated component. One advantage of the present disclosure is a bond coating system more capable of resisting oxidation. Another advantage of an embodiment of the present disclosure is a longer spall life provided in a cost effective way.

Examples of substrates that receive bond coats include GTD-111, Rene N4 (RN4) and Rene 108 (R108). GTD-111 has a nominal composition, in weight percent of the alloy, of 14 percent chromium, 9.5 percent cobalt, 3.8 percent tungsten, 1.5 percent molybdenum, 4.9 percent titanium, 3.0 percent aluminum, 0.1 percent carbon, 0.01 percent boron, 2.8 percent tantalum, and the balance nickel and incidental impurities. Rene N4, has a nominal composition, in weight percent of the alloy, of 7.5 percent cobalt, 9.75 percent chromium, 4.20 percent aluminum, 3.5 percent titanium, 1.5 percent molybdenum, 4.8 percent tantalum, 6.0 percent tungsten, 0.5 percent columbium (niobium), 0.05 percent carbon, 0.15 percent hafnium, 0.004 percent boron, and the balance nickel and incidental impurities. Rene 108 has a nominal composition of 0.07-0.10 percent carbon, 8.0-8.7 percent chromium, 9.0-10.0 percent cobalt, 0.4-0.6 percent molybdenum, 9.3-9.7 percent tungsten, 2.5-3.3 percent tantalum, 0.6-0.9 percent titanium, 5.25-5.75 percent aluminum, 0.01-0.02 percent boron, 1.3-1.7 percent hafnium, 0.1 percent maximum manganese, 0.06 percent maximum silicon, 0.01 percent maximum phosphorus, 0.004 percent maximum sulfur, 0.005-0.02 percent zirconium, 0.1 percent maximum niobium, 0.1 percent maximum vanadium, 0.1 percent maximum copper, 0.2 percent maximum iron, 0.003 percent maximum magnesium, 0.002 percent maximum oxygen, 0.002 percent maximum nitrogen, balance nickel and incidental impurities.

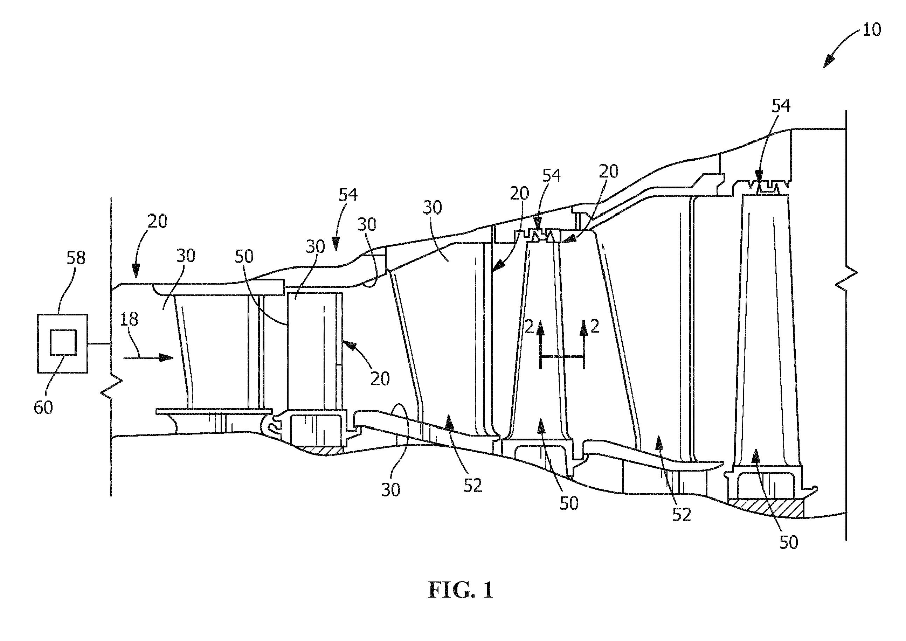

Referring to FIGS. 1-6, a high temperature oxidation resistant bond coating system 210 are disclosed herein. The bond coating system 210 includes a first coating layer 212 and a second coating layer 214. First coating layer 212 includes a first MCrAlX alloy 260. Second coating layer 214 includes a second MCrAlX alloy 270. Bond coating system 210 is used to coat various high temperature articles, particularly various components 20 of a turbine engine 10, and even more particularly for use as a bond coating system 210 for various components 20 of an industrial gas turbine that comprise the hot gas flow path 18 and surfaces 30 that are exposed to the high temperature combustion gases that flow through this path. Bond coating system 210 is particularly well-suited for use with various turbine blades (or turbine buckets) 50, but is also well suited for use with other components, including vanes (or turbine nozzles) 52, shrouds 54, combustors 58, fuel nozzles 60, transition pieces, combustor liners and the like, and including subcomponents and subassemblies of these components. For example, a combustor 58 generally comprises an assembly of a plurality of components, including various subassemblies, and bond coat system 210 may be incorporated on any or all of the components and subassemblies. Bond coating system 210 may be applied to any suitable substrate 200, particularly various superalloy substrates 200, including Co-based, Ni-based or Fe-based superalloy substrates, or combinations thereof. In an exemplary embodiment, bond coating system 210 disclosed herein may be used, for example, on the pressure or suction surface of the airfoil section or blade tip of a gas turbine blade 50, as illustrated in FIG. 1.

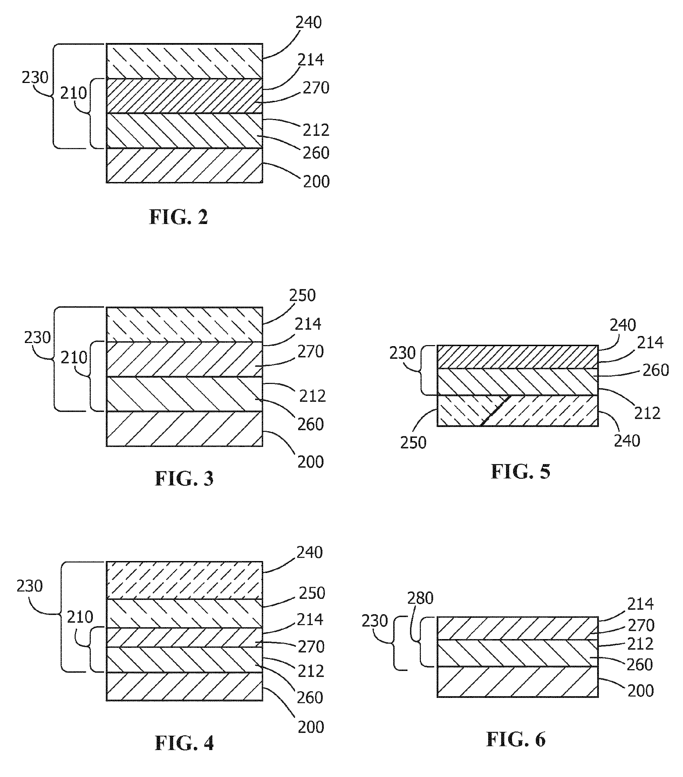

In an exemplary embodiment, a surface 30 of a component 20, such as turbine blade 50, is protected by bond coating system 210 as a metallic protective coating layer, as illustrated in greater detail in FIG. 2, which depicts an enlargement of a section through the surface 30 of a component 20, such as a turbine blade 50. Surface 30 may include any portion of the component 20 on which it is desirable to provide bond coating system 210 to protect substrate 200 from oxidation, including surfaces 30 that comprise hot gas flow path 18 and are directly exposed to the hot combustion gases that flow through this path, as well as other surfaces, including those that are not directly exposed to the hot combustion gases, but which may be exposed to high temperatures resulting from these gases. In one exemplary embodiment, surface 30 may include the surface of the airfoil section or blade tip of turbine blade 50.

Bond coating system 210 may be used by itself to protect surface 30, as shown in FIG. 6, or may be used in conjunction with other high temperature materials, including other high temperature coating materials, to provide a protective system 230 of coating layers, as described herein, wherein bond coating system 210 may be used, for example, as an under layer or an inner layer or an outer layer, or a combination thereof, in such a system.

Protective system 230 may include bond coating system 210 as an under layer as part of a combination of coating layers that also includes one or more thermal barrier coating (TBC) layer 240, or one or more aluminide coating layer 250, or one or more other bond coat layers, or a combination thereof. In an exemplary embodiment, as illustrated in FIG. 2, protective system 230 may include bond coating system 210 as an oxidation resistant under layer for at least one TBC layer 240, wherein bond coating system 210 is disposed on surface 30 of substrate 200, such as a superalloy substrate, and at least one TBC layer 240 is disposed on bond coating system 210 and may be subject to exposure to the hot combustion gas.

In another exemplary embodiment, as illustrated in FIG. 3, protective system 230 may include bond coating system 210 as an oxidation resistant under layer for at least one aluminide layer 250, wherein the bond coating system 210 is disposed on surface 30 of substrate 200, such as a superalloy substrate, and at least one aluminide layer 250 is disposed on bond coating system 210 and may be subject to exposure to the hot combustion gas.

In yet another exemplary embodiment, as illustrated in FIG. 4, protective system 230 may include bond coating system 210 as an oxidation resistant under layer for aluminide layer 250 and TBC layer 240, wherein bond coating system 210 is disposed on surface 30 of substrate 200, at least one aluminide layer 250 is disposed on bond coating system 210 and at least one TBC layer 240 is disposed on aluminide layer 250 and may be subject to exposure to the hot combustion gas.

Protective system 230 may also include bond coating system 210 as an inner layer as part of a combination of coating layers that also includes one or more thermal barrier coating (TBC) layer 240, or one or more aluminide layer 250, or a combination thereof. For example, in exemplary embodiments, protective systems 230 of FIGS. 2-4 may optionally include at least one aluminide layer 250 or another bond coat layer disposed on substrate 200, between substrate 200 and bond coating system 210. Otherwise, the arrangement of bond coating system 210 layer, aluminide layer 250 and TBC layer 240 is as described above in FIGS. 2-4.

In yet another exemplary embodiment, as illustrated in FIG. 5, protective system 230 may include bond coating system 210 as an outer layer as part of a combination of coating layers that also includes one or more thermal barrier coating (TBC) layer 240, or one or more aluminide layer 250, or a combination thereof. Other combinations of one or more bond coating system 210 layers as an outer layer, in combination with one or more TBC layer 240 or one or more aluminide layer 250, or another bond coat layer, or a combination thereof, are also possible.

In a further exemplary embodiment, as illustrated in FIG. 6, protective system 230 may include just bond coating system 210 as an outer layer, not in combination with other coating layers.

Protective systems 230 described above, including those that include bond coating system 210 alone, include bond coating 280 including first coating layer 212 and second coating layer 214. First coating layer 212 includes a γ/β microstructure. Second coating layer 214 includes a γ/γ'+β microstructure. In one embodiment, first coating layer 212 has a thickness of about 25.4 microns (1 milli-inch) to about 1524 (60 milli-inches) or alternatively about 76 microns (3 milli-inches) to about 1270 microns (50 milli-inches) or alternatively about 178 microns (7 milli-inches) to about 1143 microns (45 milli-inches). In one embodiment, second coating layer 214 has a thickness of about 25.4 microns (1 milli-inch) to about 762 microns (30 milli-inches) or alternatively about 76 microns (3 milli-inches) to about 635 microns (25 milli-inches) or alternatively about 178 microns (7 milli-inches) to about 508 microns (20 milli-inches). In one embodiment, first coating layer 212 includes a first alloy 260 and second coating layer 214 includes second alloy 270. First alloy 260 and second alloy 270 are generally superalloys that comprise cobalt, nickel or iron, or any combination thereof, including cobalt-based, nickel-based or iron-based superalloys. Of these alloys where first alloy 260 and second alloy 270 comprise a cobalt-based, cobalt-nickel-based or nickel-cobalt-based superalloy, bond coating system 210 provides a good combination of high temperature oxidation resistance, TBC spallation resistance and ductility. As used herein, a metal-based (e.g., cobalt, nickel or iron) means that the named metal (e.g., cobalt-based) is the primary constituent of the alloy, by weight. Where more than one metal (e.g., metal1-metal2-based) is used, the metals are listed in descending order by weight of the alloy. For example, a cobalt-nickel-based alloy means that cobalt and nickel are the primary alloy constituents, by weight, with the weight fraction of cobalt being larger than that of nickel; and a nickel-cobalt-based alloy means that nickel and cobalt are the primary alloy constituents, by weight, with the weight fraction of nickel being larger than that of cobalt.

An example of an existing MCrAlY bond coat alloy used for turbine engine applications includes a conventional gamma-beta (γ/β) MCrAlY (NiCrAlY) bond coat having a nominal composition, by weight of the alloy, 22 percent chromium, 10 percent aluminum, 1 percent yttrium, and the balance nickel and incidental impurities, where sulfur may be an incidental impurity, and is controlled to 100 parts per million (ppm) or less. Another conventional gamma-gamma prime MCrAlY (NiCoCrAlY) bond coat known as BC52 has a nominal composition, by weight of the alloy, 18 percent chromium, 6.5 percent aluminum, 10 percent cobalt , 6 percent tantalum, 2 percent rhenium, 0.5 percent hafnium, 0.3 percent yttrium, 1.0 percent silicon, 0.015 percent zirconium, 0.06 percent carbon, 0.015 percent boron, and the balance nickel and incidental impurities. Yet another example of an existing MCrAlY (NiCoCrAlY) bond coat alloy used for turbine engine application has a nominal composition, by weight of the alloy of about 25 percent to about 45 percent nickel, about 15 percent to about 30 percent chromium, about 8.0 percent to about 13 percent aluminum, about 0.19 percent to about 1.0 percent yttrium, and the balance cobalt and incidental impurities.

In one embodiment, the cobalt-based, cobalt-nickel-based or nickel-cobalt-based superalloy first coating layer 212 bond coat 280 of bond coating system 210 includes a γ/β microstructure. First coating layer 212 includes a first MCrAlX alloy 260, where M includes cobalt, and may also optionally include nickel, and where X includes yttrium from about 0.001 percent to less than 0.19 percent by weight of the alloy and may also optionally include silicon or germanium, or a combination thereof. First MCrAlX alloy 260 generally employs reduced amounts of yttrium compared to existing MCrAlY bond coat alloys used for turbine engine applications, which have a nominal composition that includes 0.3 percent Y, and where Y is known to range from 0.19 percent to 1.0 percent. The reduced amounts of yttrium advantageously provide improved oxidation resistance and increased TBC spallation resistance for these alloys when used in protection systems 230 that also include TBC layer 240. First MCrAlX alloy 260 may employ increased amounts of aluminum as compared to existing MCrAlY bond coat alloys, which advantageously further improves the oxidation resistance as compared to existing bond coat alloys. First MCrAlX alloy 260 may also optionally employ germanium, which is not present in existing MCrAlY bond coat alloys, which also advantageously improves the ability to retain the beta phase for longer exposure times in turbine engine applications as described herein. First MCrAlX alloy 260 may also optionally employ silicon, which advantageously improves oxidation resistance and TBC spallation life.

In an exemplary embodiment, first MCrAlX alloy 260 is a cobalt-based, cobalt-nickel- based or nickel-cobalt-based MCrAlX alloy having a microstructure that includes gamma and beta phases wherein, by weight of the alloy, M comprises cobalt in an amount of at least about 27 percent and X comprises yttrium in an amount of about 0.001 percent to less than 0.19 percent by weight of the alloy. More particularly, yttrium may be present in an amount, by weight of the alloy, from about 0.001 percent to about 0.18 percent, alternatively from about 0.01 percent to about 0.18 percent, or alternatively from about 0.02 percent to about 0.15 percent. First MCrAlX alloy 260 may also optionally include germanium in an amount, by weight of the alloy, from about 0.001 percent to about 1.5 percent, alternatively from about 0.01 percent to about 1.5 percent, or alternatively from about 0.2 percent to about 1.5 percent. First MCrAlX alloy 260 may also optionally include silicon in an amount, by weight of the alloy, of up to about 1.5 percent, alternatively from about 0.01 percent to about 1.5 percent, or alternatively from about 0.1 percent to about 1.5 percent. In another exemplary embodiment, first MCrAlX alloy 260 may also be described as comprising a cobalt-nickel-based alloy, and may include, by weight of the alloy, from about 20.0 percent to about 82.0 percent nickel, from about 10.0 percent to about 28.0 percent chromium, from about 5.0 percent to about 15.0 percent aluminum, and yttrium and optionally germanium or silicon, or a combination thereof, in the amounts described above, including from about 0.001 percent to less than 0.19 percent yttrium, about 0.001 percent to about 1.5 percent germanium and up to about 1.5 percent silicon, and the balance cobalt and incidental impurities. The incorporation of yttrium in the amounts indicated increases the resistance of first MCrAlX alloy 260 to oxidation and TBC spallation compared to, for example, existing bond coat alloys, and includes yttrium in a nominal amount of 0.3 percent. Existing bond coat alloys are known to range in commercial practice from 0.19 percent to 1.0 percent by weight yttrium of the alloy, and do not include germanium or silicon.

In one embodiment, second coating layer 214 is a nickel-based superalloy bond coat material, and more particularly a nickel-cobalt-based superalloy bond coat material. Second coating layer 214 includes a γ/γ'+β microstructure. Second coating layer 214 includes second MCrAlX alloy 270 wherein, by weight of second alloy, M comprises nickel in an amount of at least about 30.0 percent and X comprises from about 0.005 percent to about 0.19 percent yttrium. Second MCrAlX alloy 270 generally employs reduced amounts of yttrium compared to existing MCrAlY bond coat alloys used for turbine engine applications, discussed above, such as, for example, BC52.. The reduced amounts of yttrium in second MCrAlX alloy 270 disclosed herein advantageously provides improved oxidation resistance and increased TBC spallation resistance for these alloys when used in protective systems 230 that also include TBC layer 240. As compared to the gamma-gamma prime BC52 bond coat material, second MCrAlX alloys 270 disclosed herein are silicon-free to prevent the possibility of formation of brittle TixSiy phases when used with alloys that include Ti and improve strain tolerance, have increased amounts of Al to improve oxidation resistance, and are rhenium-free to provide enhanced strain tolerance with regard to the onset of crack initiation and avoid the use of this strategically important element, which is strategic owing to its limited supply and associated cost. Second MCrAlX alloy 270 also may employ germanium, which is not present in existing MCrAlY bond coat alloys, such as those described above.

In an exemplary embodiment, second MCrAlX alloy 270 comprises a nickel-based MCrAlX alloy having a microstructure that includes gamma, beta and gamma prime phases wherein, by weight of the alloy, M comprises nickel in an amount of at least about 30 percent and X comprises from about 0.005 percent to about 0.19 percent yttrium. In another exemplary embodiment, second MCrAlX alloy 270 comprises a nickel-cobalt-based MCrAlX (NiCoCrAlX) alloy having a microstructure that includes gamma, beta and gamma prime phases wherein, by weight of the alloy, M comprises nickel in an amount of at least about 30 percent and cobalt in an amount of about 5.0 percent to about 15.0 percent, and X comprises yttrium in an amount from about 0.005 percent to about 0.19 percent. Second MCrAlX alloy 270 may also include germanium in an amount, by weight of the alloy, up to about 1.25 percent.

In one exemplary embodiment, second MCrAlX alloy 270 comprises, by weight of the alloy, from about 5.0 percent to about 15.0 percent cobalt, from about 12.0 percent to about 28.0 percent chromium, from about 6.5 percent to about 11.0 percent aluminum, up to about 1.25 percent germanium, from about 4.0 percent to about 8.0 percent tantalum, from about 0.005 percent to about 0.05 percent zirconium, from about 0.005 percent to about 0.8 percent hafnium, from about 0.005 percent to about 0.19 percent yttrium, and the balance nickel and incidental impurities. In another embodiment, second MCrAlX alloy 270 comprises, by weight of the alloy, from about 8.5 percent to about 12.0 percent cobalt, from about 16.0 percent to about 21.0 percent chromium, from about 6.5 percent to about 8.5 percent aluminum, from about 4.5 percent to about 7 percent tantalum, from about 0.001 percent to about 0.1 percent zirconium, from about 0.1 percent to about 0.65 percent hafnium, from about 0.005 percent to about 0.19 percent yttrium, up to about 1.25 percent germanium, and the balance nickel and incidental impurities. Second MCrAlX alloy 270 has more aluminum than the existing gamma-gamma prime-beta bond coat alloys described herein. Without being limited by theory, this may provide additional aluminum that may avoid depletion of aluminum in bond coating system 210 material during high temperature exposure in an oxidizing environment, and thus promote improved oxidation and spallation resistance. Second MCrAlX alloys 270 described herein are substantially silicon-free and substantially rhenium-free (i.e., contain substantially no silicon or rhenium other than as an incidental impurity). As used herein, substantially silicon-free means that even where silicon may be present, such as by incorporation as an incidental impurity, it will comprise, by weight of the alloy, about 0.1 percent or less. The absence of silicon avoids the possibility of the formation of brittle TixSiy intermetallic phases in or adjacent to the bond coat/substrate interface, particularly where the materials proximate second MCrAlX alloy 270 may include titanium. As used herein, substantially rhenium-free means that even where Re may be present, such as by incorporation as an incidental impurity, it will comprise, by weight of the alloy, about 0.1 percent or less. Avoidance of the use of rhenium improves the strain tolerance and avoids the need for this strategic element. The incorporation of yttrium and/or germanium in the amounts indicated increases the resistance of second MCrAlX alloy 270 to oxidation compared to, for example, existing bond coat alloys, as described herein, that include yttrium in a nominal amount of about 1 percent, and which do not include germanium.

First and second MCrAlX alloys 260 and 270 disclosed herein may be used in any suitable form, including as an alloy used to form an entire article of the types disclosed herein, or as a bond coating system 210. First and second MCrAlX alloys 260 and 270 may be formed by any suitable method, including various vacuum melting methods, and particularly melting methods employed for various superalloys, particularly cobalt-based, cobalt-nickel-based, nickel-based or nickel-cobalt-based superalloys. The bond coat material may be applied by vapor deposition, slurry deposition, or any thermal spray process including, but not limited to, high velocity oxygen fuel spraying (HVOF), high velocity air fuel spraying (HVAF), vacuum plasma spray (VPS), air plasma spray (APS), ion plasma deposition (IPD), electron-beam physical vapor deposition (EBPVD) and cold spray methods.

Protective system 230 may also include an aluminide layer 250 disposed relative to the bond coating system 210 material and other coatings, as described herein. Aluminide layer 250 may include any suitable aluminide, including a diffusion aluminide, such as a simple diffusion aluminide or a complex diffusion aluminide, such as a platinum aluminide. Aluminide layer 250 may have any suitable thickness, and in an exemplary embodiment, may have a thickness from about 12.7 microns (0.5 milli-inches) to about 101.6 microns (4 milli-inches) thick.

Protective system 130 may also include TBC layer 240 disposed relative to the bond coating system 210 material and other coatings, as described herein. Any suitable thermal barrier layer 240 may be used, including a dense vertically microcracked (DVM) ceramic TBC layer 240. TBC layer 140 may have any suitable thickness, and in an exemplary embodiment, may have a thickness from about 127 microns (5 milli-inches) to about 2032 microns (80 milli-inches).

### Examples

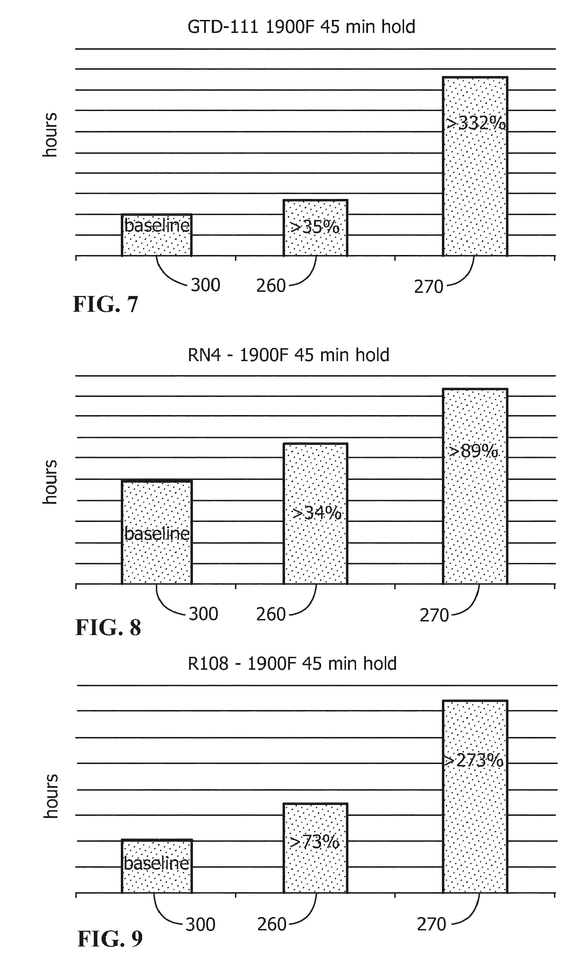

For example, as shown in FIGS. 7-9, first MCrAlX alloy 260 and second MCrAlX 270 increase the spallation resistance when applied to a superalloy substrate 200 as an under layer for a TBC layer 240 compared to a known bond coat 300. The known bond coat 300 has a nominal composition, by weight of the alloy of about 30 percent to about 34 percent nickel, about 21 percent to about 24 percent chromium, about 9.5 percent to about 10.5 percent aluminum, about 0.1 percent to about 0.5 percent yttrium, and the balance cobalt and incidental impurities. As shown in FIGS. 7-9, a known bond coating alloy 300 has a baseline number of hours to spallation. First MCrAlX alloy 260 increases the spallation time compared to known bond coat 300 by more than 30 percent. Second MCrAlX alloy 270 increases the spallation time compared to known bond coat 300 by more than 80 percent. Combining first MCrAlX alloy 260 and second MCrAlX 270 alloy to form bond coating system 210 should result in increased spallation resistance when bond coating system 210 is applied to a superalloy substrate 200.

For a given operating temperature, 1900°F (for 45 minutes), the spallation resistance of protection system 230 comprising first MCrAlX alloy 260 and second MCrAlX alloys 270 as a bond coating system 210 material under a TBC layer 240 should have greater than the resistance of a protection system comprising known bond coat alloy 300 having higher amounts of yttrium under the same TBC layer 240. From another perspective, the use of first MCrAlX alloy 260 as first layer 214 and second MCrAlX alloy 270 as second layer 216 has the capability to enable the protection system 230 described, i.e., bond coating system 210/TBC coating layer 240, to achieve about the same spallation resistance at an average operating temperature that was about 1900°F or more higher than that of a protection system comprising the known bond coat alloy 300 and a TBC layer. Therefore, first MCrAlX alloy 260 and second MCrAlX alloy 270 should improve the spallation resistance sufficiently to enable longer operating lifetimes at the same operating temperature or the similar operating lifetimes at higher operating temperatures. When used in the amounts disclosed herein, yttrium in the MCrAlX protective systems 230 disclosed herein improves oxidation resistance by delaying alumina spallation. First MCrAlX alloy 260 and second MCrAlX alloy 270 were also tested by room temperature uniaxial tensile testing at a constant strain rate to assess their strain tolerance before crack initiation, as shown in FIG. 9.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A bond coating system comprising:
a bond coat including:
a first coating layer adjacent a substrate, the first coating layer including a γ/β microstructure; and
a second coating layer adjacent the first coating layer, the second coating layer including a γ/γ'+β microstructure.

2. The bond coat system of claim 1, wherein the first coating layer comprises a first MCrAlX alloy, wherein M comprises cobalt and X comprises, by weight of the alloy, from about 0.001 percent to less than 0.19 percent yttrium.

3. The bond coat system of claim 2, wherein M of the first MCrAlX alloy further comprises nickel, or wherein M of the first MCrAlX alloy comprises cobalt, nickel or iron, or any combination thereof.

4. The bond coat system of claim 2 or claim 3, wherein the first MCrAlX alloy comprises yttrium from about 0.006 percent to less than 0.19 percent by weight of the alloy.

5. The bond coat system of any one of claims 2 to 4, wherein X of the first MCrAlX alloy further comprises up to about 1.5 percent silicon by weight of the alloy, or about 0.01 percent to about 1.5 percent silicon by weight of the alloy.

6. The bond coat system of claim 2, wherein the first MCrAlX alloy comprises or consists of, by weight of the first alloy, (a) from about 20.0 percent to about 82.0 percent nickel, from about 10.0 percent to about 28.0 percent chromium, from about 5.0 percent to about 15.0 aluminum, X comprising from about 0.001 percent to less than 0.19 percent yttrium, and the balance cobalt and incidental impurities; or
(b) from about 20.0 percent to about 82.0 percent nickel, from about 10.0 percent to about 28.0 percent chromium, from about 5.0 percent to about 15.0 percent aluminum, X comprising from about 0.001 percent to less than 0.19 percent yttrium and from about 0.001 percent to about 1.5 percent silicon, and the balance cobalt and incidental impurities.

7. The bond coat system of any preceding claim, wherein the second coating layer comprises a second MCrAlX alloy, wherein, by weight of the alloy, M comprises nickel in an amount of at least about 30 percent and X comprises from about 0.005 percent to about 0.19 percent yttrium.

8. The bond coat system of claim 7, wherein X of the second MCrAlX alloy further comprises up to about 1.25 percent germanium by weight of the alloy.

9. The bond coat system of claim 7 or claim 8, wherein the second MCrAlX alloy comprises or consists of, (a) by weight of the alloy, from about 5.0 percent to about 15.0 percent cobalt, from about 12.0 percent to about 28.0 percent chromium, from about 6.5 percent to about 11.0 percent aluminum, from about 4.0 percent to about 8.0 percent tantalum, from about 0.005 percent to about 0.5 percent zirconium, from about 0.005 percent to about 0.8 percent hafnium, from about 0.005 percent to about 0.19 percent yttrium, up to about 1.25 percent germanium, and the balance nickel and incidental impurities; or
(b) from about 8.5 percent to about 12.0 percent cobalt, from about 16.0 percent to about 21.0 percent chromium, from about 6.5 percent to about 8.5 percent aluminum, from about 4.5 percent to about 7.0 percent tantalum, from about 0.001 percent to about 0.1 percent zirconium, from about 0.1 percent to about 0.65 percent hafnium, from about 0.005 percent to about 0.19 percent yttrium, up to about 1.25 percent germanium, and the balance nickel and incidental impurities.

10. A coated component comprising:
a substrate having a surface;
a first coating layer disposed on the surface, the first coating layer including a γ/β microstructure; and
a second coating layer disposed on the first coating layer, the second coating layer including a γ/γ'+β microstructure.

11. The coated component of claim 10, further comprising a thermal barrier coating disposed on the second coating layer.

12. The coated component of claim 10 or claim 11, wherein the first coating layer comprises a first MCrAlX alloy, wherein M comprises cobalt and X comprises, by weight of the alloy, from about 0.001 percent to less than 0.19 percent yttrium.

13. The coated component of any one of claims 10 to 12, wherein the second coating layer comprises a second MCrAlX alloy, wherein, by weight of the alloy, M comprises nickel in an amount of at least about 30 percent and X comprises from about 0.005 percent to about 0.19 percent yttrium.

14. The coated component of claim 12, wherein the first MCrAlX alloy comprises or consists of, by weight of the first alloy, from about 20.0 percent to about 82.0 percent nickel, from about 10.0 percent to about 28.0 percent chromium, from about 5.0 percent to about 15.0 percent aluminum, X comprising from about 0.001 percent to less than 0.19 percent yttrium, and the balance cobalt and incidental impurities.

15. The coated component of claim 13 or claim 14, wherein the second MCrAlX alloy comprises or consists of, by weight of the alloy, from about 5.0 percent to about 15.0 percent cobalt, from about 12.0 percent to about 28.0 percent chromium, from about 6.5 percent to about 11.0 percent aluminum, from about 4.0 percent to about 8.0 percent tantalum, from about 0.005 percent to about 0.5 percent zirconium, from about 0.005 percent to about 0.8 percent hafnium, from about 0.005 percent to about 0.19 percent yttrium, up to about 1.25 percent germanium, and the balance nickel and incidental impurities.

16. The coated component of any one of claims 10 to 15, wherein the substrate comprises an iron-based, nickel-based or cobalt-based superalloy, or a combination thereof.
